# EUROPÄISCHE PATENTANMELDUNG

(11) **EP 4 306 460 A1**
(43) Veröffentlichungstag der Anmeldung: **17.01.2024**
(21) Anmeldenummer: 23180864.3
(22) Anmeldetag: 22.06.2023
(51) Int. Cl.: B65G 47/84, B29C 49/42, B65G 47/86

(54) **SCHLEUSE FÜR EINE ANLAGE ZUM HERSTELLEN UND/ODER BEHANDELN VON BEHÄLTERN UND ANLAGE UMFASSEND DIE SCHLEUSE**

(30) Priorität: 13.07.2022 DE 102022117421
(71) Anmelder: KHS GmbH, 44143 Dortmund (DE)
(72) Erfinder: Baumgartner, Klaus, 55543 Bad Kreuznach (DE); Krulitsch, Dieter-Rudolf, 55545 Bad Kreuznach (DE)

(57) **Zusammenfassung**

Die Erfindung betrifft eine Schleuse (10) für eine Anlage (80) zum Herstellen und/oder Behandeln von Behältern (12), umfassend eine Kammer (14) mit einer ersten Wand (16), eine erste Durchtrittsöffnung (18) für Behälter, die in der ersten Wand (16) angeordnet ist, und ein erstes Schott (20) zum Verschließen der ersten Durchtrittsöffnung (18), wobei die Schleuse (10) in der Kammer (14) eine erste Achse (22) aufweist, wobei das erste Schott (20) zwischen einer ersten Stellung und einer zweiten Stellung um die erste Achse (22) schwenkbar gelagert ist, wobei das erste Schott (20) in der ersten Stellung die erste Durchtrittsöffnung (18) blockiert und in der zweiten Stellung die erste Durchtrittsöffnung (18) freigibt. Mit der Erfindung wird eine Schleuse (10) bereitgestellt, die eine vereinfachte Handhabung aufweist sowie einfach zu reinigen und kostengünstig ist.

## Beschreibung

Die Erfindung betrifft eine Schleuse für eine Anlage zum Herstellen und/oder Behandeln von Behältern sowie eine Anlage umfassend die Schleuse.

Anlagen zum Herstellen von Behältern können Transporteinrichtungen aufweisen, die Behälter durch die Anlage transportieren. Weiter können diese Anlagen Nassbereiche, die mit speziellen Reinigungs- und/oder Desinfektionsmitteln, z. B. H₂O₂, gereinigt oder desinfiziert werden, und Trockenbereiche, in denen die Reinigung ohne diese speziellen Reinigungs- und/oder Desinfektionsmittel durchgeführt wird, da Komponenten im Trockenbereich empfindlich auf diese speziellen Reinigungs- und/oder Desinfektionsmittel reagieren können. Die Transporteinrichtungen transportieren die Behälter dabei zwischen den Trocken- und Nassbereichen.

Die Trockenbereiche und die Nassbereiche grenzen in den Anlagen daher regelmäßig unmittelbar aneinander an, wobei die Transporteinrichtungen zwischen den Trocken- und Nassbereichen in der Regel stationär angeordnet sind. Bei der Reinigung der Grenzregionen der Nassbereiche soll ein Übertritt der Reinigungs- und/oder Desinfektionsmittel in den Trockenbereich vermieden werden, um die Komponenten im Trockenbereich zu schonen, die empfindlich auf die Reinigungs- und/oder Desinfektionsmittel reagieren.

Aus WO 2019/048249 A1 ist eine Behälterbehandlungsanlage mit mindestens zwei unterschiedlichen Anlagenbereichen bekannt, wobei Fördereinrichtungen Behälter zwischen den Anlagenbereichen transportieren. Die Bereiche sind durch einen Maschinenschutz mit einem Fenster voneinander begrenzt, wobei die Behälter durch das Fenster zwischen den Anlagenbereichen transportiert werden können. Die Fenster sind durch ein senkrecht verschiebbares ein- oder mehrteiliges Schottelement zumindest teilweise verschließbar. Die senkrecht verschiebbaren Schottelemente weisen allerdings Bereiche auf, die schmale Spalte aufweisen und in denen eine Reinigung erschwert ist.

Aufgabe der Erfindung ist es, eine Schleuse bereitzustellen, die eine vereinfachte Handhabung aufweist sowie einfach zu reinigen und kostengünstig ist.

Die Aufgabe wird gelöst durch die Merkmale der unabhängigen Ansprüche. Vorteilhafte Weiterbildungen sind Gegenstand der abhängigen Ansprüche sowie der folgenden Beschreibung.

Bei einer Schleuse für eine Anlage zum Herstellen und/oder Behandeln von Behältern, umfassend eine Kammer mit einer ersten Wand, eine erste Durchtrittsöffnung für Behälter, die in der ersten Wand angeordnet ist, und ein erstes Schott zum Verschließen der ersten Durchtrittsöffnung, ist erfindungsgemäß vorgesehen, dass die Schleuse in der Kammer eine erste Achse aufweist, wobei das erste Schott zwischen einer ersten Stellung und einer zweiten Stellung um die erste Achse schwenkbar gelagert ist, wobei das erste Schott in der ersten Stellung die erste Durchtrittsöffnung blockiert und in der zweiten Stellung die erste Durchtrittsöffnung freigibt.

Mit der Erfindung wird damit eine Schleuse bereitgestellt, deren erstes Schott um die erste Achse schwenkbar gelagert ist, um die erste Durchtrittsöffnung in der ersten Wand zu öffnen und zu schließen. Die Schleuse kann z. B. zwischen verschiedenen Anlagenteilen einer Anlage in einem Transportpfad der Behälter angeordnet sein. Die Schleuse kann z. B. zwischen einem Anlagenteil im Trockenbereich und einem Anlagenteile im Nassbereich der Anlage angeordnet sein. In einer vertikalen Richtung kann die Wand sich in gerader Linie erstrecken. Weiter kann die Kammer beispielsweise zylinderförmig sein oder gerade Wände aufweisen. Das erste Schott kann mittels eines um die erste Achse schwenkbaren Trägerelements, z. B. einer Strebe, mit der ersten Achse verbunden sein und sich radial von der ersten Achse zum ersten Schott erstrecken. Das Schwenken des ersten Schotts kann damit z. B. mittels eines Antriebs bewirkt werden, der an der ersten Achse angeordnet ist. Das erste Schott weist weiter mindestens zwei Stellungen auf, wobei das Schott in einer ersten Stellung die erste Durchtrittsöffnung blockiert und in einer zweiten Stellung die erste Durchtrittöffnung freigibt. Um zwischen den beiden Stellungen zu wechseln, kann das erste Schott um die erste Achse verschwenkt werden. Dabei wird das erste Schott über einen Rand der Öffnung über die erste Durchtrittsöffnung bzw. von der ersten Durchtrittsöffnung bewegt. Vorzugsweise handelt es sich bei der ersten Achse um eine vertikale Achse. Weiter kann das erste Schott außerhalb der Kammer oder innerhalb der Kammer angeordnet sein. Für das Bereitstellen des Schotts werden schmale Spalte vermieden, die schwer zu reinigen sind, so dass die Schleuse eine vereinfachte Handhabung aufweist sowie einfach zu reinigen und kostengünstig ist.

Unter dem Behandeln von Behältern kann zum Beispiel ein Reinigen, ein Sterilisieren, ein Beschichten, ein Etikettieren und/oder Füllen der Behälter verstanden werden.

Denkbar ist, dass das erste Schott beispielsweise in einem Bogen um die erste Achse schwenkbar ist. Das erste Schott kann in dieser Ausführungsform beim Verschwenken zwischen der ersten und der zweiten Stellung einer bogenförmigen, vorzugsweise einer kreisbogenförmigen, Bahn folgen.

Gemäß einem Beispiel kann die Kammer mindestens einen Transportstern für Behälter aufweisen, der um die erste Achse drehbar gelagert ist und einen Drehantrieb zum Drehen des Transportsterns aufweist.

Die erste Wand erstreckt sich vorzugsweise zumindest teilweise um den mindestens einen Transportstern herum, wobei der Bogen passend zu der Krümmung des Umfangs des Transportsterns ausgebildet ist. Weiter kann die Kammer mehrere Transportsterne aufweisen. Die weiteren Wände der Kammer können dann zumindest teilweise das Volumen der Kammer umschließen. Ein Transportstern kann Greifer für die Behälter aufweisen, wobei die Greifer die Behälter zum Beispiel an einem Haltekragen im Mündungsbereich des Behälters greifen. Die Greifer können entlang eines Umfangs des Transportsterns verteilt angeordnet sein, so dass bei einer Drehung des Transportsterns ein Transport der gegriffenen Behälter stattfindet.

Gemäß einem weiteren Beispiel kann das erste Schott eine lösbare Kupplung zum Verbinden des ersten Schotts mit dem Drehantrieb aufweisen, wobei das erste Schott durch den Drehantrieb um die erste Achse verschwenkbar ist, wenn das erste Schott durch die lösbare Kupplung mit dem Drehantrieb verbunden ist.

Die lösbare Kupplung kann unmittelbar am Transportstern ansetzen oder an der drehenden Achse des mindestens einen Transportsterns, die sich entlang der ersten Achse erstreckt. Alternativ oder zusätzlich kann die lösbare Kupplung unmittelbar am Drehantrieb ansetzen. Weiter kann die lösbare Kupplung vorzugsweise einen in Axialrichtung der ersten Achse beweglichen Koppelfinger umfassen. Zum Verbinden kann der Koppelfinger in eine passende Öffnung des mindestens einen Transportsterns eingreifen. Mit der lösbaren Kupplung kann das erste Schott mittels des für den Transportstern vorgesehen Drehantriebs um die erste Achse verschwenkt werden, um die erste Durchtrittsöffnung zu öffnen oder zu schließen. Es wird dann kein separater Antrieb für das erste Schott benötigt. Wenn die lösbare Kupplung das erste Schott mit dem Drehantrieb verbindet, kann das Verschwenken des ersten Schotts zwischen der ersten und der zweiten Stellung gleichzeitig mit einer Drehung des Transportsterns durchgeführt werden.

Denkbar ist weiter, dass das erste Schott zum Beispiel einen separaten Antrieb zum Verschwenken des ersten Schotts aufweisen kann. In diesen Fall sind der separate Antrieb und der Drehantrieb für den Transportstern voneinander getrennt.

Gemäß einem weiteren Beispiel kann das erste Schott einen Schlitz für Greifer eines Transportsterns aufweisen.

Die Behälter können zwischen verschiedenen Transportsternen übergeben werden. Dazu kann es erforderlich sein, dass die Greifer verschiedener Transportsterne sich an einer Übergabeposition überlappen. Daher können die Greifer eines außerhalb der Kammer angeordneten Transportsterns in die Kammer hineinragen und in das Innere der Kammer der Schleuse eingreifen. Durch den Schlitz können die Greifer des außerhalb der Kammer angeordneten Transportsterns in die Kammer ragen, ohne dass das erste Schott bei Wechseln zwischen den Stellungen mit den Greifern kollidiert. Weiter wird dann kein zweiteiliges erstes Schott benötigt, wobei der erste Teil des ersten Schotts oberhalb und ein zweiter Teil des ersten Schotts unterhalb der Greifer bewegt wird.

Weiter ist denkbar, dass das erste Schott z. B. näher als die erste Wand an der ersten Achse angeordnet ist. Das erste Schott kann dann innerhalb der Kammer angeordnet sein, z. B. an einem Übergang zu einem Nassbereich. Reinigungs- und/oder Desinfektionsflüssigkeit, die außerhalb der Kammer verwendet wird und an die Außenseite der ersten Wand gelangt, kann dann von der ersten Wand innerhalb der Kammer abtropfen. Ein Austreten von Reinigungs- und/oder Desinfektionsflüssigkeit aus der Kammer bzw. aus dem Nassbereich kann damit verringert oder völlig vermieden werden.

Alternativ ist denkbar, dass das erste Schott z. B. weiter als die erste Wand von der Achse angeordnet ist. Das erste Schott ist dann außerhalb der Kammer angeordnet sein, z. B. bei einem Übergang in einen Trockenbereich. Reinigungs- und/oder Desinfektionsflüssigkeit, die innerhalb der Kammer verwendet wird und auf die Innenseite der ersten Wand gelangt, kann dann innerhalb der Kammer abtropfen. Damit wird ein Durchtritt der Reinigungs- und/oder Desinfektionsflüssigkeit durch die Schleuse weiter verringert oder völlig vermieden.

Weiter ist denkbar, dass der Boden der Schleuse als Wanne ausgebildet ist, wobei die Wanne eine erste Wannenwand aufweisen kann, die sich parallel zur ersten Wand erstreckt. Die erste Wannenwand ist vorzugsweise weiter von der ersten Achse als das erste Schott angeordnet, wenn das erste Schott weiter als die erste Wand von der ersten Achse angeordnet ist. Reinigungs- und Desinfektionsmittel, das von innerhalb der Kammer an das erste Schott gelangt, kann dann innerhalb der Kammer abtropfen und wird am Boden durch die erste Wannenwand an einem Austreten aus der Kammer gehindert. Weiter kann die erste Wannenwand z. B. als Schwelle ausgebildet sein, wobei in einer Richtung parallel zur ersten Achse ein Abstand zwischen der ersten Wand und der ersten Wannenwand ausgebildet sein kann.

Wenn das erste Schott näher als die erste Wand an der ersten Achse angeordnet ist, kann die erste Wannenwand näher an der ersten Achse als das erste Schott angeordnet sein. Reinigungs- und Desinfektionsmittel, das von außerhalb der Kammer an das erste Schott gelangt, kann dann außerhalb der Kammer abtropfen und wird am Boden von der ersten Wannenwand an einem Eindringen in die Kammer gehindert.

Gemäß einer bevorzugten Ausführungsform kann die Kammer eine zweite Wand mit einer zweiten Durchtrittsöffnung und ein zweites Schott zum Verschließen der zweiten Durchtrittsöffnung aufweisen, wobei das zweite Schott zwischen einer dritten Stellung und einer vierten Stellung um eine zweite Achse schwenkbar gelagert ist, wobei das zweite Schott in der dritten Stellung die zweite Durchtrittsöffnung blockiert und in der vierten Stellung die zweite Durchtrittsöffnung freigibt. Vorzugsweise handelt es sich bei der zweiten Achse um eine vertikale Achse.

Das zweite Schott kann zum Beispiel einen separaten Antrieb haben oder über eigene oder gemeinsame lösbare Kupplung durch den Drehantrieb des mindestens einen Transportsterns angetrieben werden, der innerhalb der Kammer angeordnet sein kann.

Weiter kann die zweite Wand gegenüberliegend zur ersten Wand angeordnet sein. Die erste Durchtrittsöffnung und die zweite Durchtrittsöffnung können bezüglich der Kammer ebenfalls einander gegenüberliegen angeordnet sein. Beispielsweise kann die erste Wand im Trockenbereich angeordnet sein und die zweite Wand im Nassbereich.

Die erste Achse und die zweite Achse können zum Beispiel an der gleichen Position, z. B. als Achse eines einzigen Transportsterns, oder voneinander beabstandet, z. B. als Achsen von zwei Transportsternen, in der Kammer angeordnet sein.

Gemäß einem Beispiel können die erste Achse und die zweite Achse durch eine gemeinsame Achse gebildet werden.

Der Abstand des ersten Schotts von der gemeinsamen Achse und der Abstand des zweiten Schotts von der gemeinsamen Achse können unterschiedlich sein, um eine Kollision zu vermeiden. Damit sei jedoch nicht ausgeschlossen, dass der Abstand der beiden Schotts zu der gemeinsamen Achse gleich ist.

Das erste Schott und das zweite Schott können eine feste oder variable Winkelbeziehung zueinander aufweisen und können um die gemeinsame Achse gleich- oder gegensinnig zueinander bewegt werden. Wenn die beiden Schotts gegensinnig zueinander bewegt werden, können die beiden Schotts jeweils einen eigenen Antrieb aufweisen. Weiter können die beiden Schotts dann jede Winkelbeziehung in Bezug zur gemeinsamen Achse zueinander annehmen, sofern eine Kollision vermieden wird. Die erste und zweite Durchtrittsöffnung können dann unabhängig voneinander geöffnet und verschlossen werden.

Wenn die beiden Schotts gleichsinnig um die gemeinsame Achse bewegt werden, können sie fest miteinander verbunden sein und einen gemeinsamen Antrieb aufweisen. Dann können die beiden Schotts bezüglich der gemeinsamen Achse beispielsweise einander diametral gegenüber angeordnet sein. Alternativ können die beiden Schotts einen festen Winkel ungleich 180° in Bezug zur gemeinsamen Achse einschließen. Im Fall eine festen Winkelbeziehung können die beiden Schotts die entsprechenden Durchtrittsöffnungen zumindest in einer Stellung gleichzeitig verschließen.

Weiter kann das erste Schott in einem ersten alternativen Beispiel näher als die erste Wand an der ersten Achse angeordnet sein und das zweite Schott weiter als die zweite Wand von der zweiten Achse angeordnet sein. In einem zweiten alternativen weiteren Beispiel kann das erste Schott weiter als die erste Wand von der ersten Achse angeordnet sein und das zweite Schott näher als die zweite Wand an der zweiten Achse angeordnet sein.

In der ersten Alternative kann Reinigungs- und Desinfektionsmittel, das von außerhalb der Kammer an die erste Wand gelangt, dann von der ersten Wand außerhalb der Kammer abtropfen. Entsprechend kann Reinigungs- und Desinfektionsmittel, das von innerhalb der Kammer an die zweite Wand gelangt, in die Kammer hinein abtropfen. In Bezug auf die zweite Alternative gilt selbstverständlich das Umgekehrte.

In einem weiteren Ausführungsbeispiel kann sich die zweite Wand in einem Bogen um eine in der Kammer angeordneten zweite Achse erstrecken und das zweite Schott zwischen einer dritten Stellung und einer vierten Stellung, vorzugsweise entlang der zweiten Wand, um die zweite Achse schwenkbar gelagert sein.

Zusätzlich können die erste Wand und die zweite Wand jeweils halbzylinderförmig ausgebildet sein.

In einem weiteren Beispiel kann die erste Wand einen kleineren Radius hinsichtlich der ersten Achse als die zweite Wand hinsichtlich der zweiten Achse aufweisen.

Gemäß einem Beispiel kann ein Trägerelement das erste Schott mit der ersten Achse verbinden, wobei das erste Schott an einem ersten Endstück des Trägerelements angeordnet ist und ein gegenüberliegendes zweites Endstück schwenkbar an der ersten Achse gelagert ist.

Denkbar ist, dass die lösbare Kupplung an dem Trägerelement angeordnet sein kann. Wenn ein Transportstern in der Kammer angeordnet ist, kann sich das Trägerelement unterhalb des Transportsterns von der ersten Achse zum ersten Schott erstrecken. Der Abstand zwischen dem Trägerelement und dem Transportstern ist dann derart groß gewählt, dass eine Kollision mit von dem Transportstern gehaltenen Behältern vermieden wird.

Gemäß einem Beispiel kann die erste Wand eine sich um die erste Achse erstreckende Öffnung aufweisen, durch die sich das Trägerelement von der ersten Achse zum ersten Schott erstreckt.

Die erste Öffnung kann z. B. ein Schlitz sein, der sich entlang der ersten Wand um die erste Achse erstreckt. Weiter kann die erste Wand von einem Boden der Schleuse beabstandet angeordnet sein, so dass die erste Öffnung zwischen dem Boden und dem Rand der ersten Wand ausgebildet wird. Dazu kann die erste Wand z. B. an einem oberen Rand an einer auf dem Boden abgestützten Decke der Kammer bzw. Schleuse befestigt sein.

Das zweite Schott kann ebenfalls über ein Trägerelement mit der Achse verbunden sein.

Die erste Wand und/oder das erste Schott können gemäß einem weiteren Beispiel aus Metall, insbesondere Edelstahl, oder aus Kunststoff, insbesondere Acrylglas, oder aus Glas hergestellt sein. Edelstahl ist unempfindlich gegenüber der meisten Reinigungs- und Desinfektionsmittel. Acrylglas bzw. Glas können ebenfalls unempfindlich gegenüber der meisten Reinigungs- und Desinfektionsmittel sein und sind transparent.

Weiter ist denkbar, dass die Schleuse eine Absaugeinrichtung für Reinigungs- und/oder Desinfektionsmittel aufweisen kann.

Durch das Absaugen kann eine Luftströmung in der Kammer erzeugt werden, die eine Wahrscheinlichkeit eines Austritts von Reinigungs- und/oder Desinfektionsmittel verringert. Die Absaugeinrichtung kann beispielsweise an einer Decke der Kammer angeordnet sein, so dass Reinigungs- und/oder Desinfektionsmittel nach oben abgesaugt wird.

Gemäß einem Ausführungsbeispiel kann sich die erste Wand in einem Bogen um die erste Achse erstrecken, wobei das erste Schott zwischen der ersten Stellung und der zweiten Stellung, vorzugsweise entlang der ersten Wand, um die erste Achse schwenkbar gelagert sein kann.

Die erste Wand kann um die erste Achse gebogen ausgebildet sein, wobei der Bogen insbesondere ein Kreisbogen sein kann. Wenn die erste Wand sich um 180° um die erste Achse erstreckt, kann die Kammer im Bereich der ersten Wand damit als Halbzylinder ausgebildet sein. Dabei kann sich das erste Schott entlang der bogenförmigen ersten Wand bewegen. Das erste Schott kann weiter beispielsweise eine zur ersten Wand passende Krümmung aufweisen, um den Abstand zwischen dem ersten Schott und der ersten Wand zu minimieren. Das erste Schott kann weiter au-ßen oder innen an der ersten Wand entlang bewegt werden.

Weiter ist denkbar, dass die erste Wand plan ausgebildet sein kann. Dabei sei nicht ausgeschlossen, dass die erste Wand auch eine andere Form aufweisen kann. Ebenso ist denkbar, dass die zweite Wand plan ausgebildet sein kann, wobei nicht ausgeschlossen werden soll, dass die zweite Wand auch eine andere Form aufweisen kann.

Weiter betrifft die Erfindung eine Anlage zum Herstellen und/oder Behandeln von Behältern, umfassend einen ersten Anlagenteil mit einer ersten Einheit zum Herstellen und/oder Behandeln von Behältern, einen zweiten Anlagenteil mit einer zweiten Einheit zum Behandeln der Behälter, eine Schleuse nach der vorangegangenen Beschreibung und einer Transporteinrichtung zum Transportieren der Behälter durch die Schleuse zwischen der ersten Einheit und der zweiten Einheit.

Vorteile und Wirkungen sowie Weiterbildungen der Anlage ergeben sich aus den Vorteilen und Wirkungen sowie Weiterbildungen der oben beschriebenen Schleuse. Zur Vermeidung von Wiederholungen wird daher in dieser Hinsicht auf die vorangegangene Beschreibung verwiesen.

Der erste Anlagenteil mit der ersten Einheit kann als Trockenbereich ausgebildet sein, wobei der zweiten Anlagenteil mit der zweiten Einheit als Nassbereich ausgebildet sein kann. Wenn zum Beispiel das erste Schott am ersten Anlagenteil angeordnet ist, kann es weiter als die erste Wand von der Achse entfernt angeordnet sein. Reinigungs- und Desinfektionsmittel, das von der Kammer an die erste Wand gelangt, kann dann in die Kammer hinein abtropfen.

Wenn das erste Schott beispielsweise am zweiten Anlagenteil angeordnet ist, kann das erste Schott näher als die erste Wand an der ersten Achse angeordnet sein. Reinigungs- und Desinfektionsmittel, das von außerhalb der Kammer an die erste Wand gelangt, kann dann außerhalb der Kammer abtropfen.

Gemäß einem Beispiel kann die Transporteinrichtung mindestens einen um die erste Achse drehbar gelagerten Transportstern aufweisen, der in der Schleuse angeordnet ist, wobei sich die erste Wand zumindest teilweise um den Transportstern erstreckt.

Weiter können in der Kammer der Schleuse mehrere Transportsterne angeordnet sein.

Gemäß einem weiteren Beispiel kann die zweite Einheit eine Desinfektionsvorrichtung für die Behälter und/oder eine Füllvorrichtung für die Behälter sein.

Die Füllvorrichtung ist vorzugsweise eine als Rundläufermaschine ausgebildete Füllmaschine. Weiter kann die Füllvorrichtung eine Einrichtung zur Behälter-Sterilisation aufweisen.

Gemäß einem anderen Beispiel kann die erste Einheit eine Blasmaschine, insbesondere eine Streckblasmaschine, sein. Die Blasmaschine ist vorzugsweise eine Rundläufermaschine. Weiter kann die Blasmaschine eine Einrichtung zur Preform-Sterilisation aufweisen.

Im Folgenden wird die Erfindung anhand beispielhafter Ausführungsformen mittels der beigefügten Zeichnung beschrieben. Es zeigen:
- Figur 1: eine schematische Darstellung einer Anlage zum Herstellen und/oder Behandeln von Behältern;
- Figur 2a, b: eine schematische Draufsicht auf eine Schleuse für die Anlage;
- Figur 3: eine schematische Querschnittsdarstellung der Schleuse;
- Figur 4a, b: eine schematische Seitenansicht der Schleuse;
- Figur 5: eine schematische Draufsicht eines zweiten Beispiels der Schleuse; und
- Figur 6: eine schematische Darstellung eines dritten Beispiels der Schleuse.

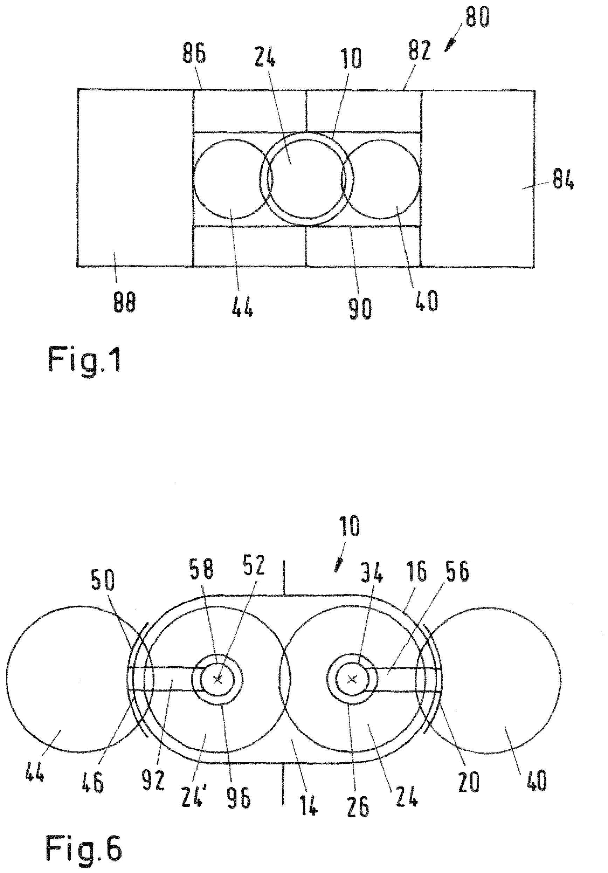

In Figur 1 ist eine Anlage zum Herstellen und/oder Behandeln von Behältern dargestellt, auf die im Folgenden in ihrer Gesamtheit mit dem Bezugszeichen 80 verwiesen wird. Die Anlage 80 weist einen ersten Anlagenteil 82 und eine zweiten Anlagenteil 86 auf.

Der ersten Anlagenteil 82 kann als Trockenbereich ausgebildet sein und eine erste Einheit 84 aufweisen. Die erste Einheit 84 kann eine Blasmaschine, insbesondere eine Streckblasmaschine, sein.

Der zweite Anlagenteil 86 kann als Nassbereich ausgebildet sein und eine zweite Einheit 88 aufweisen. Die zweite Einheit 88 kann eine Desinfektionsvorrichtung für die Behälter und/oder eine Füllvorrichtung für die Behälter sein.

Weiter weist die Anlage 80 eine Transporteinrichtung 90 auf, die Behälter zwischen der ersten Einheit 84 und der zweiten Einheit 88 transportieren kann. Dazu weist die Transporteinrichtung 90 Transportsterne 24, 40, 44 auf. In diesem Beispiel sind drei Transportsterne 24, 40, 44 dargestellt. Die Transporteinrichtung 90 kann jedoch eine beliebige Anzahl Transportsterne 24, 40, 44 aufweisen.

Jeder Transportstern 24, 40, 44 ist um eine eigene Achse drehbar gelagert und kann Greifer zum Greifen der Behälter aufweisen. Die Greifer können entlang der Umfänge der Transportsterne 24, 40, 44 verteilt angeordnet sein. Die Transportsterne 24, 40, 44 sind weiter derart angeordnet, dass sie einander Behälter übergeben können. Der Pfad, auf dem die Behälter transportiert werden, kann als Transportpfad bezeichnet werden.

Zwischen dem ersten Anlagenteil 82 und dem zweiten Anlagenteil 86 ist eine Schleuse 10 angeordnet, wobei die Transporteinrichtung 90 die Behälter durch die Schleuse 10 transportiert.

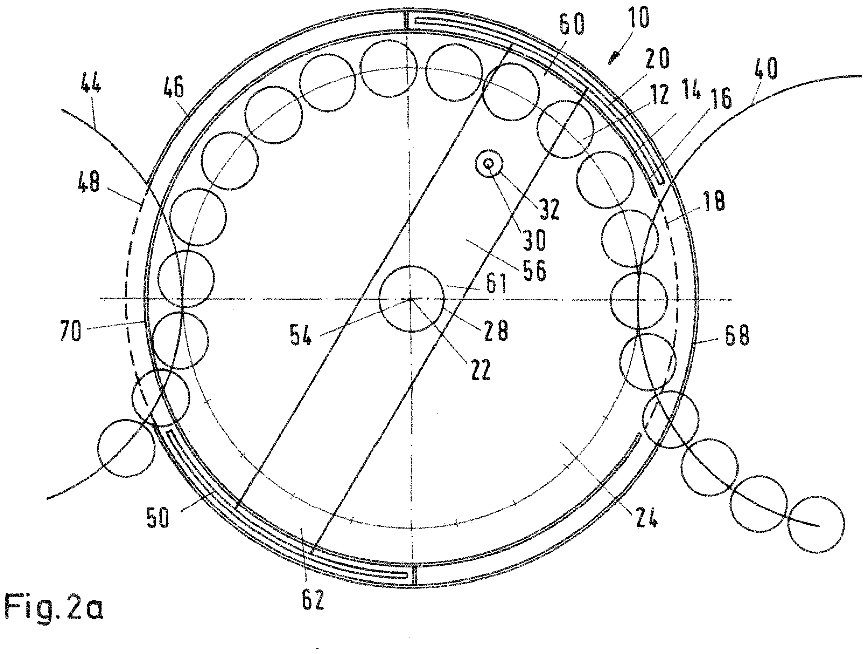

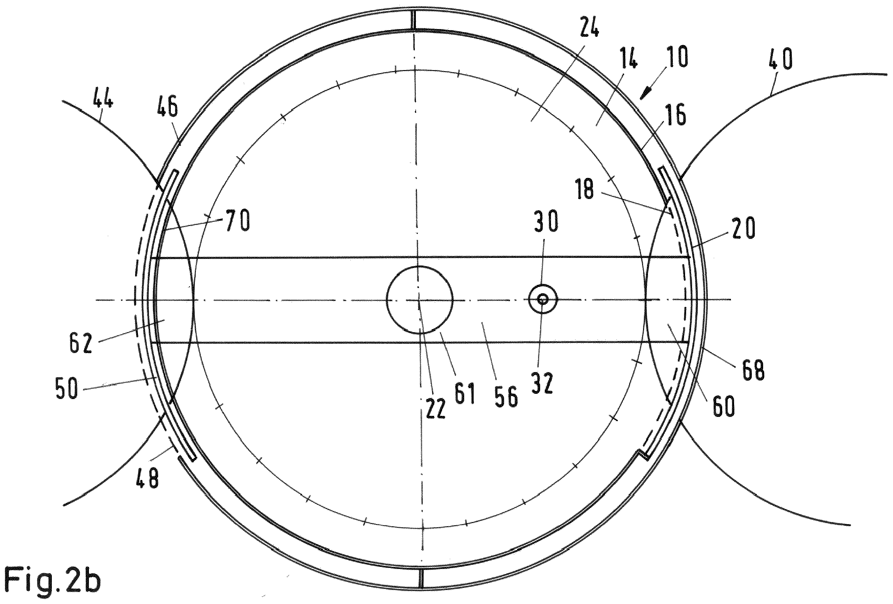

Fig. 2a und 2b zeigen eine Draufsicht auf eine Schleuse 10. In diesem Beispiel weist die Schleuse 10 eine Kammer 14 auf, in der ein Transportstern 24 der Transporteinrichtung 90 angeordnet ist. Dabei ist der Transportstern 24 um eine erste Achse 22 drehbar gelagert und kann mittels eines Drehantriebs um die erste Achse 22 gedreht werden.

Außerhalb der Kammer 14 sind ein zweiter Transportstern 40 in einem Trockenbereich und ein dritter Transportstern 44 in einem Nassbereich dargestellt, wobei die Behälter 12 an einer ersten Übergabeposition zwischen dem zweiten Transportstern 40 und dem Transportstern 24 übergeben werden und an einer zweiten Übergabeposition zwischen dem dritten Transportstern 44 und dem Transportstern 24 übergeben werden. Dazu ragen Abschnitte des zweiten und dritten Transportsterns 40, 44 von außen in die Kammer 14.

Die Kammer 14 wird durch eine erste Wand 16 und eine zweite Wand 46 begrenzt. Die erste und die zweite Wand 16, 46 erstrecken sich um den Transportstern 24. Weiter erstrecken sich die erste Wand 16 und die zweite Wand 46 in einem Bogen um die erste Achse 22 herum. Dabei weisen sowohl die erste Wand 16 als auch die zweite Wand 46 eine halbzylindrische Form auf. Jede der beiden Wände 16, 46 kann daher einem Kreisbogen um die erste Achse 22 folgen.

Für den Transport der Behälter 12 weist die erste Wand 16 an der Übergabeposition zwischen dem zweiten Transportstern 40 und dem Transportstern 24 eine erste Durchtrittsöffnung 18 für die Behälter 12 auf. Analog weist die zweite Wand 46 eine zweite Durchtrittsöffnung 48 an der Übergabeposition zwischen dem Transportstern 24 und dem dritten Transportstern 44 auf.

Zum Verschließen der ersten Durchtrittsöffnung 18 weist die Schleuse 10 ein erstes Schott 20 auf, das entlang der ersten Wand 16 um die erste Achse 22 schwenkbar gelagert ist. Dabei kann das erste Schott 20 zwischen einer ersten Stellung, in der das erste Schott 20 die erste Durchtrittsöffnung 18 blockiert, und einer zweiten Stellung, in der das erste Schott 20 die erste Durchtrittsöffnung 18 freigibt, verschwenkt werden.

Das erste Schott 20 kann an einem Trägerelement 56 befestigt sein, das als Strebe ausgebildet sein kann. Dabei ist das erste Schott 20 an einem ersten Endstück 60 des Trägerelements 56 befestigt. Das Trägerelement 56 kann an einem Mittelstück 61 an einer Hülle 28 des Transportsterns 24 gelagert sein, die sich entlang der ersten Achse 22 erstreckt. Bei einer Drehung des Transportsterns 24 dreht sich die Hülle 28 nicht mit.

Zum Verschließen der zweiten Durchtrittsöffnung 48 weist die Schleuse 10 ein zweites Schott 50 auf, das entlang der zweiten Wand 46 um die zweite Achse 22 schwenkbar gelagert ist. Dabei kann das zweite Schott 50 zwischen einer dritten Stellung, in der das zweite Schott 50 die zweite Durchtrittsöffnung 48 blockiert, und einer vierten Stellung, in der das zweite Schott 50 die zweite Durchtrittsöffnung 48 freigibt, verschwenkt werden.

Das zweite Schott 50 kann ebenfalls über das Trägerelement 56 an der Hülle 28 des Transportsterns 24 gelagert sein, die sich entlang der zweiten Achse 22 erstreckt. Damit ist die Winkelbeziehung zwischen dem ersten Schott 20 und dem zweiten Schott 50 in diesem Beispiel fix.

Weiter bildet die erste Achse 22 eine gemeinsame Achse 54 für die beiden Schotts 20, 50.

Fig. 2a zeigt das erste und zweite Schott 20, 50 in der zweiten bzw. vierten Stellung, in der die erste und zweite Durchtrittsöffnung 18, 48 freigegeben sind. Die Transportsterne 24, 40, 44 können daher Behälter 12 durch die Schleuse transportieren.

Fig. 2b zeigt das erste und zweite Schott 20, 50 in der ersten bzw. dritten Stellung, in der die erste und zweite Durchtrittsöffnung 18, 48 blockiert sind. Die Transportsterne 24, 40, 44 können daher keine Behälter 12 durch die Schleuse 10 transportieren. Vor dem Blockieren wurde ein Zustrom an Behältern 12 gestoppt, so dass der Transportpfad geleert wurde.

Zum Antreiben des ersten Schotts 20 kann das erste Schott 20 über eine lösbare Kupplung 30 mit dem Transportstern 24 verbunden werden, die in diesem Beispiel an dem Trägerelement 56 befestigt ist. Für das Verbinden kann der Transportstern 24 eine Koppelöffnung 32 aufweisen, in die ein Koppelfinger der lösbare Kupplung 30 eingefahren werden kann, wenn die lösbare Kupplung 30 und die Koppelöffnung 32 passend zueinander angeordnet sind.

Dazu kann der Transportstern 24 so weit gedreht werden, bis die Koppelöffnung 32 über der lösbare Kupplung 30 angeordnet ist. Der Koppelfinger kann dann aus der lösbare Kupplung 30 hinausfahren und in die Koppelöffnung 32 gesteckt werden.

Nach der Kopplung kann das erste Schott 20 über eine Drehung des Transportsterns 24 um die erste Achse 22 gedreht werden.

Da in diesem Beispiel das zweite Schott 50 an einem dem ersten Endstück 60 gegenüberliegenden zweiten Endstück 62 des Trägerelements 56 befestigt. Damit kann das zweite Schott 50 gleichzeitig mit dem ersten Schott 20 um die erste Achse 22 gedreht werden.

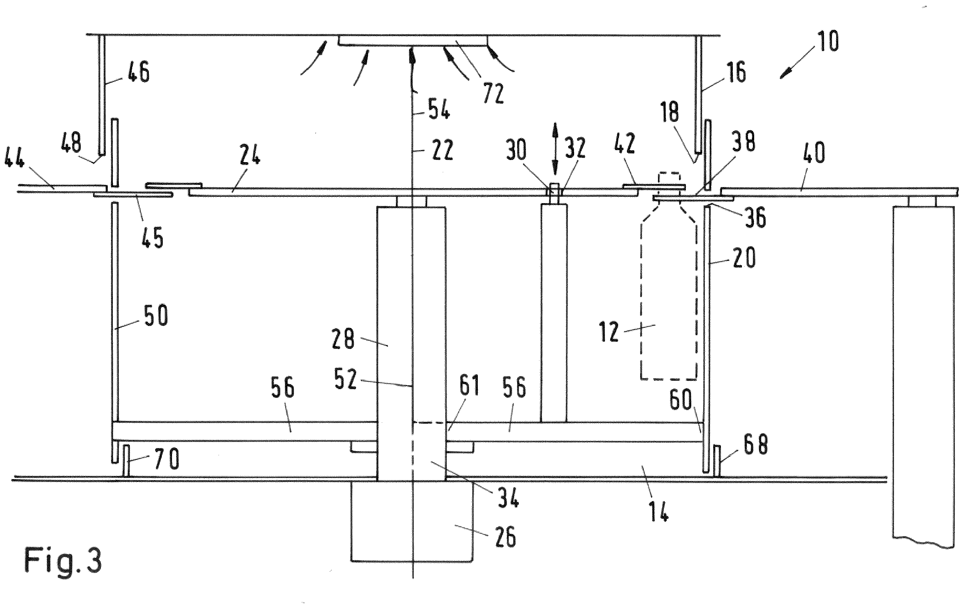

Fig. 3 zeigt ein schematische Querschnittsdarstellung der Schleuse 10. Dabei ist dargestellt, dass sich das Trägerelement 56 unterhalb des Transportsterns 24 erstreckt und die lösbare Kupplung 30 einen vertikalen Abstand zwischen dem Transportstern 24 und dem Trägerelement 56 überbrückt. Der Doppelpfeil deutet das Einfahren und das Ausfahren des Koppelfingers an.

Die lösbare Kupplung 30 kann alternativ z. B. eine Magnetkupplung aufweisen und/oder unmittelbar an dem Drehantrieb 26 des Transportsterns 24 angreifen.

Weiter kann ein separater Antrieb 34 anstatt des Drehantriebs 26 des Transportsterns 24 für das Bewegen des ersten Schotts 20 vorgesehen werden.

Um ein Austreten von Reinigungs- und/oder Desinfektionsflüssigkeit aus der Kammer 14 zu vermeiden, kann die Schleuse 10 weiter eine Absaugvorrichtung 72 aufweisen. Die Absaugvorrichtung 72 kann z. B. an der Decke der Kammer 14 angeordnet sein.

Weiter kann die erste Wand 16, die am Trockenbereich angeordnet ist, einen geringeren Abstand zur ersten Achse 22 als das erste Schott 20 aufweisen. Reinigungs- und/oder Desinfektionsflüssigkeit, die in der Kammer 14 verwendet wird, würde dann, wie aus Fig. 3 ersichtlich, von der ersten Wand 16 in die Kammer 14 abtropfen.

Zusätzlich kann die Schleuse 10 einen Boden aufweisen, der als Wanne mit einer ersten Wannenwand 68 ausgebildet ist. Die erste Wannenwand 68 kann als Schwelle für die erste Durchtrittsöffnung 18 ausgebildet sein. Das erste Schott 20 kann dabei einen geringeren Abstand zur ersten Achse 22 als die erste Wannenwand 68 aufweisen. Reinigungs- und/oder Desinfektionsflüssigkeit, die in der Kammer 14 verwendet wird, würde dann, wie aus Fig. 3 ersichtlich, von dem ersten Schott 20 in die Wanne abtropfen.

Weiter kann die zweite Wand 46, die am Nassbereich angeordnet ist, einen größeren Abstand zur ersten Achse 22 als das zweite Schott 50 aufweisen. Reinigungs- und/oder Desinfektionsflüssigkeit, die im Nassbereich verwendet wird, würde dann, wie aus Fig. 3 ersichtlich, von der zweiten Wand 46 in den Nassbereich abtropfen und nicht in die Kammer 14.

Die Wanne kann weiter eine zweite Wannenwand 70 aufweisen, die als Schwelle für die zweite Durchtrittsöffnung 48 ausgebildet ist. Das zweite Schott 50 kann dabei einen größeren Abstand zur ersten Achse 22 als die zweite Wannenwand 70 aufweisen. Reinigungs- und/oder Desinfektionsflüssigkeit, die in dem Nassbereich verwendet wird, würde dann, wie aus Fig. 3 ersichtlich, von dem zweiten Schott 50 in den Nassbereich abtropfen und nicht in die Kammer 14 gelangen.

Die zweite Wannenwand 70 kann eine Höhe aufweisen, die kleiner ist als die Höhe, in der das Trägerelement 56 angeordnet ist, so dass das Trägerelement 56 oberhalb der zweiten Wannenwand 70 verschwenkt werden kann.

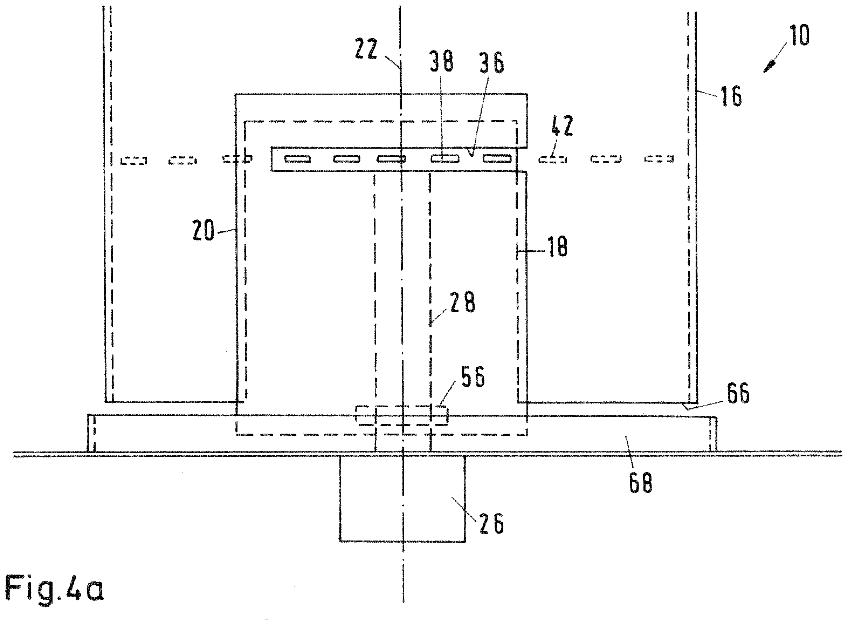

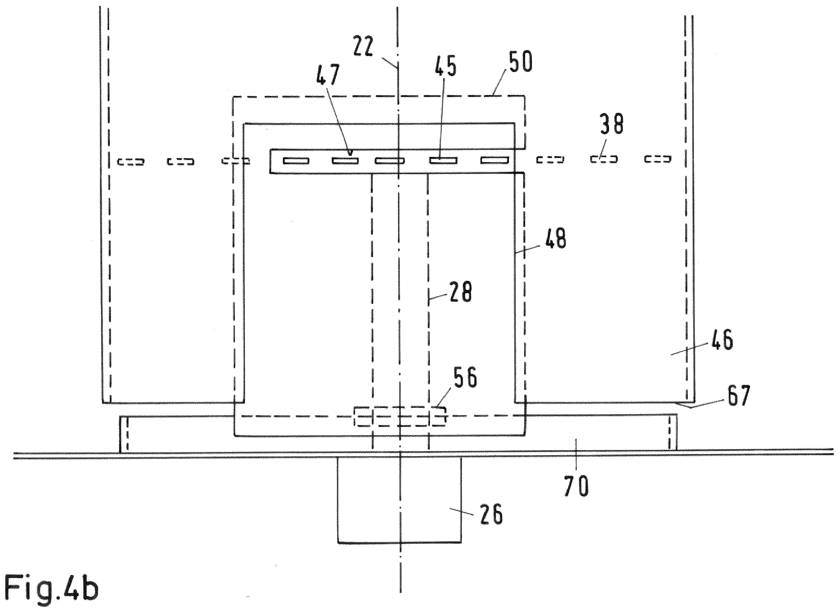

Dazu zeigen Fig. 4a und 4b schematische Seitenansichten der Schleuse 10. In Fig. 4a ist eine Sicht auf das erste Schott 20 dargestellt, das sich in der ersten Stellung befindet.

Zwischen der ersten Wand 16 und der ersten Wannenwand 68 ist in vertikaler Richtung eine erste Öffnung 66 angeordnet, die sich um die erste Achse 22 erstreckt. Das Trägerelement 56 erstreckt sich aus der Kammer 14 durch die Öffnung 66 zum ersten Schott 20. Die erste Wannenwand 68 ist in radialer Richtung zur ersten Achse 22 vor dem ersten Schott 20 angeordnet, das seinerseits vor der ersten Wand 16 angeordnet ist.

Das erste Schott 20 weist einen ersten Schlitz 36 auf. Durch den ersten Schlitz 36 erstrecken sich Greifer 38 des Transportsterns 40 in die Kammer 14. Der erste Schlitz 36 ist in diesem Beispiel nach rechts offen ausgebildet. Das erste Schott 20 kann daher nach links in die zweite Stellung verschwenkt werden.

In Fig. 4b ist eine Sicht auf das zweite Schott 50 dargestellt, das sich in der dritten Stellung befindet.

Zwischen der zweiten Wand 46 und der zweiten Wannenwand 70 ist in vertikaler Richtung eine zweite Öffnung 67 angeordnet, die sich um die zweite Achse 22 erstreckt.

Die zweite Wand 46 ist in radialer Richtung zur zweiten Achse 22 vor dem zweiten Schott 50 angeordnet, das seinerseits vor der zweiten Wannenwand 70 angeordnet ist.

Das zweite Schott 50 weist einen zweiten Schlitz 47 auf. Durch den zweiten Schlitz 47 erstrecken sich Greifer 45 des Transportrads 44 in die Kammer 14. Der zweite Schlitz 47 ist in diesem Beispiel nach rechts offen ausgebildet. Das zweite Schott 50 kann daher nach links in die vierte Stellung verschwenkt werden.

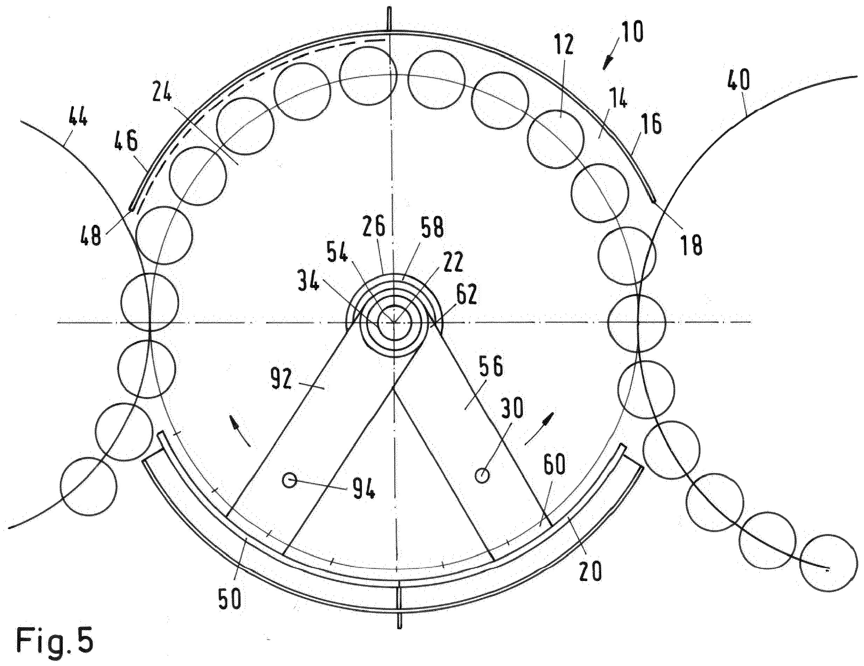

In Figur 5 ist ein weiteres Beispiel der Schleuse 10 schematisch in einer Draufsicht dargestellt.

In diesem Beispiel ist das zweite Schott 50 mittels eines zweiten Trägerelements 92 mit der gemeinsamen Achse 54 verbunden. Das zweite Trägerelement 92 weist eine zweite lösbare Kupplung 94 auf, mit der das zweite Schott 50 mit dem Drehantrieb 26 des Transportsterns 24 verbunden werden kann. Nach dem Verbinden kann das zweite Schott 50 mittels des Drehantriebs 26 um die gemeinsame Achse 54 verschwenkt werden.

Die lösbare Kupplung 30 und die zweite lösbare Kupplung 94 können nacheinander mittels der Koppelöffnung 32 an den Transportstern 24 an- und abkoppeln. Der Drehantrieb 26 des Transportsterns 24 kann dann das erste Schott 20 und das zweite Schott 50 nacheinander und ggf. in verschiedene Drehrichtungen verschwenken.

Alternativ kann das zweite Schott 50 mit einem vom Drehantrieb 26 zweiten separaten Antrieb 58 verschwenkt werden. Weiter kann das erste Schott 20 optional ebenfalls mit einem separaten Antrieb 34 verschwenkt werden. Dann können das erste und das zweite Schott 20, 50 gleichzeitig in verschiedene Drehrichtungen verschwenkt werden.

In Fig. 6 ist ein weiteres Beispiel der Schleuse 10 schematisch in einer Draufsicht dargestellt. Die Schleuse 10 weist in diesem Beispiel zusätzlich zum ersten Transportstern 24 einen weiteren Transportstern 24' in der Kammer 14 auf.

Der erste Transportstern 24 ist dabei an der ersten Wand 16 angeordnet und um die erste Achse 22 drehbar gelagert. Dabei erstreckt sich die erste Wand 16 in einem Bogen um die erste Achse 22. Weiter ist das erste Schott 20 um die erste Achse 22 verschwenkbar gelagert. Das erste Schott 20 kann mittels des erste Drehantriebs 26 des Transportsterns 24 verschwenkt werden, wenn das erste Schott 20 an den Transportstern 24 gekoppelt wird.

Alternativ kann der erste separate Antrieb 34 vorgesehen werden, um das erste Schott 20 zu verschwenken.

Der weitere Transportstern 24` ist an der zweiten Wand 46 angeordnet und drehbar um eine zweite Achse 52 gelagert. Dabei erstreckt sich die zweite Wand 46 in einem Bogen um die zweite Achse 52. Weiter ist das zweite Schott 50 um die zweite Achse 52 verschwenkbar gelagert. Das zweite Schott 50 kann mittels des zweiten Drehantriebs 96 des weiteren Transportsterns 24' verschwenkt werden, wenn das zweite Schott 50 an den weiteren Transportstern 24' gekoppelt wird.

Alternativ kann der zweite separate Antrieb 58 vorgesehen werden, um das zweite Schott 50 zu verschwenken.

In einer weiteren nicht dargestellten Ausführungsform kann die Kammer 14 kastenförmig ausgebildet sein. Die erste Wand 16 kann zum Beispiel plan ausgebildet sein, wobei das erste Schott 20 näher an der ersten Achse 22 als die erste Wand 16 angeordnet ist. Das erste Schott 16 kann in diesem Beispiel innerhalb der Kammer 14 um die erste Achse 22 schwenkbar gelagert sein.

Wenn die Wände der Kammer 14 in einem rechten Winkel zueinander angeordnet sind, weist die erste Wand 16 quer zur ersten Achse 22 eine Breite auf, die größer als der Abstand des ersten Schotts 20 von der ersten Achse 22 ist. Damit wird beim Verschwenken des ersten Schotts 20 eine Kollision des ersten Schotts 20 mit den an die erste Wand 16 anstoßenden Wänden der Kammer 14 vermieden.

Insbesondere, wenn das erste Schott 20 innerhalb der Kammer 14 angeordnet ist, kann die Kammer 14 in weiteren nicht dargestellten Ausführungsformen in einer Ansicht entlang der ersten Achse 22 jegliche Form aufweisen, z. B. sechseckig, fünfeckig, elliptisch usw., sofern das Verschwenken des ersten Schotts 20 nicht durch die Wände der Kammer behindert wird.

Die oben beschriebenen Ausführungsbeispiele dienen in keiner Weise einer Beschränkung der Erfindung. Vielmehr kann die Erfindung in vielfältiger Weise abgewandelt werden. Alle oben beschriebenen Merkmale der Erfindung können allein oder in Kombination miteinander wesentlich für die Erfindung sein.

### Bezugszeichenliste

| | | | |
|---|---|---|---|
| 10 | Schleuse | 50 | zweites Schott |
| 12 | Behälter | 52 | zweite Achse |
| 14 | Kammer | 54 | gemeinsame Achse |
| 16 | erste Wand | 56 | Trägerelement |
| 18 | erste Durchtrittsöffnung | 58 | zweiter separate Antrieb |
| 20 | erstes Schott | 60 | erstes Endstück |
| 22 | erste Achse | 61 | Mittelstück |
| 24 | Transportstern | 62 | zweites Endstück |
| 26 | Drehantrieb | 66 | erste Öffnung |
| 28 | Hülle | 67 | zweite Öffnung |
| 30 | lösbare Kupplung | 68 | ersten Wannenwand |
| 32 | Koppelöffnung | 70 | zweite Wannenwand |
| 34 | separater Antrieb | 72 | Absaugvorrichtung |
| 36 | erster Schlitz | 80 | Anlage |
| 38 | Greifer | 82 | erster Anlagenteil |
| 40 | zweiter Transportstern | 84 | erste Einheit |
| 42 | Greifer | 86 | zweiten Anlagenteil |
| 44 | dritter Transportstern | 88 | zweite Einheit |
| 45 | Greifer | 90 | Transporteinrichtung |
| 46 | zweite Wand | 92 | zweites Trägerelements |
| 47 | zweite Schlitz | 94 | zweite lösbare Kupplung |
| 48 | zweite Durchtrittsöffnung | 96 | zweiter Drehantrieb |

## Patentansprüche

1. Schleuse für eine Anlage zum Herstellen und/oder Behandeln von Behältern (12), umfassend eine Kammer (14) mit einer ersten Wand (16), eine erste Durchtrittsöffnung (18) für Behälter, die in der ersten Wand (16) angeordnet ist, und ein erstes Schott (20) zum Verschließen der ersten Durchtrittsöffnung (18), **dadurch gekennzeichnet, dass** die Schleuse (10) in der Kammer (14) eine erste Achse (22) aufweist und das erste Schott (20) zwischen einer ersten Stellung und einer zweiten Stellung um die erste Achse (22) schwenkbar gelagert ist, wobei das erste Schott (20) in der ersten Stellung die erste Durchtrittsöffnung (18) blockiert und in der zweiten Stellung die erste Durchtrittsöffnung (18) freigibt.

2. Schleuse nach Anspruch 1, **dadurch gekennzeichnet, dass** die Kammer (14) mindestens einen Transportstern (24) für Behälter (12) aufweist, der um die erste Achse (22) drehbar gelagert ist und einen Drehantrieb (26) zum Drehen des Transportsterns (24) aufweist.

3. Schleuse nach Anspruch 2, **dadurch gekennzeichnet, dass** das erste Schott (20) eine lösbare Kupplung (30) zum Verbinden des ersten Schotts (20) mit dem Drehantrieb (26) aufweist, wobei das erste Schott (20) durch den Drehantrieb (26) um die erste Achse (22) verschwenkbar ist, wenn das erste Schott (20) durch die lösbare Kupplung (30) mit dem Drehantrieb (26) verbunden ist.

4. Schleuse nach Anspruch 1 oder 2, **dadurch gekennzeichnet, dass** das erste Schott (20) einen separaten Antrieb (34) zum Verschwenken des ersten Schotts (20) aufweist.

5. Schleuse nach einem der vorangegangenen Ansprüche, **dadurch gekennzeichnet, dass** das erste Schott (20) einen Schlitz (36) für Greifer eines Transportsterns aufweist.

6. Schleuse nach einem der vorangegangenen Ansprüche, **dadurch gekennzeichnet, dass** die Kammer (14) eine zweite Wand (46) mit einer zweiten Durchtrittsöffnung (48) und ein zweites Schott (50) zum Verschließen der zweiten Durchtrittsöffnung (48) aufweist, wobei das zweite Schott (50) zwischen einer dritten Stellung und einer vierten Stellung um eine zweite Achse (52) schwenkbar gelagert ist, wobei das zweite Schott (50) in der dritten Stellung die zweite Durchtrittsöffnung (48) blockiert und in der vierten Stellung die zweite Durchtrittsöffnung (48) freigibt.

7. Schleuse nach Anspruch 6, **dadurch gekennzeichnet, dass** die erste Achse (22) und die zweite Achse (52) durch eine gemeinsame Achse (54) gebildet werden.

8. Schleuse nach Anspruch 6 oder 7, **dadurch gekennzeichnet, dass** das erste Schott (20) näher als die erste Wand (16) an der ersten Achse (22) angeordnet ist und das zweite Schott (50) weiter als die zweite Wand (46) von der zweiten Achse (52) angeordnet ist, oder
das erste Schott (20) weiter als die erste Wand (16) von der ersten Achse (22) angeordnet ist und das zweite Schott (50) näher als die zweite Wand (46) an der zweiten Achse (52) angeordnet ist.

9. Schleuse nach einem der Ansprüche 6 bis 8, **dadurch gekennzeichnet, dass** sich die zweite Wand (46) in einem Bogen um eine in der Kammer (14) angeordneten zweite Achse (52) erstreckt und das zweite Schott (50) zwischen einer dritten Stellung und einer vierten Stellung vorzugsweise entlang der zweiten Wand (46) um die zweite Achse (52) schwenkbar gelagert ist.

10. Schleuse nach einem der vorangegangenen Ansprüche, **dadurch gekennzeichnet, dass** ein Trägerelement (56) das erste Schott (20) mit der ersten Achse (22) verbindet, wobei das erste Schott (20) an einem ersten Endstück (60) des Trägerelements (56) angeordnet ist und ein gegenüberliegendes zweites Endstück (62) schwenkbar an der ersten Achse (22) gelagert ist.

11. Schleuse nach Anspruch 10, **dadurch gekennzeichnet, dass** die erste Wand (16) eine sich um die erste Achse (22) erstreckende Öffnung (66) aufweist, durch die sich das Trägerelement (56) von der ersten Achse (22) zum ersten Schott (20) erstreckt.

12. Schleuse nach einem der vorangegangenen Ansprüche, **dadurch gekennzeichnet, dass** die Schleuse (10) eine Absaugeinrichtung (72) für Reinigungs- und/oder Desinfektionsmittel aufweist.

13. Schleuse nach einem der vorangegangenen Ansprüche, **dadurch gekennzeichnet, dass** sich die erste Wand (16) in einem Bogen um die erste Achse (22) erstreckt und das erste Schott (20) zwischen der ersten Stellung und der zweiten Stellung vorzugsweise entlang der ersten Wand (16) um die erste Achse (22) schwenkbar gelagert ist.

14. Anlage zum Herstellen und/oder Behandeln von Behältern (12), umfassend einen ersten Anlagenteil (82) mit einer ersten Einheit (84) zum Herstellen und/oder Behandeln von Behältern (12), einen zweiten Anlagenteil (86) mit einer zweiten Einheit (88) zum Behandeln der Behälter, eine Schleuse (10) nach einem der voranstehenden Ansprüche und einer Transporteinrichtung (90) zum Transportieren der Behälter (12) durch die Schleuse (10) zwischen der ersten Einheit (84) und der zweiten Einheit (88).

15. Anlage nach Anspruch 14, **dadurch gekennzeichnet, dass** die Transporteinrichtung (90) mindestens einen um die erste Achse (22) drehbar gelagerten Transportstern (24) aufweist, der in der Schleuse (10) angeordnet ist, wobei sich die erste Wand (16) zumindest teilweise um den Transportstern (24) erstreckt.

16. Anlage nach Anspruch 14 oder 15, **dadurch gekennzeichnet, dass** die zweite Einheit (88) eine Desinfektionsvorrichtung für die Behälter (12) und/oder eine Füllvorrichtung für die Behälter (12) ist.

17. Anlage nach einem der Ansprüche 14 bis 16, **dadurch gekennzeichnet, dass** die erste Einheit (84) eine Blasmaschine, insbesondere eine Streckblasmaschine, und/oder eine Desinfektionsvorrichtung für Vorformlinge ist.
